# FASCICULE DE BREVET EUROPEEN

(11) **EP 1 280 708 B1**
(45) Date de publication et mention de la délivrance du brevet: **11.08.2004**
(21) Numéro de dépôt: 01931791.6
(22) Date de dépôt: 04.05.2001
(51) Int. Cl.: B65D 5/00, B65D 1/22

(54) **CONTENEUR EMPILABLE SANS COUVERCLE AVEC PAROIS REPLIABLES**
STAPEL- UND ZUSAMMENKLAPPBARER BEHÄLTER OHNE DECKEL
STACKABLE AND COLLAPSIBLE LIDLESS CONTAINER

(30) Priorité: 12.05.2000 FR 0006180
(43) Date de publication de la demande: 05.02.2003
(73) Titulaire: Chaudiere, André, 30240 le Grau du Roi (FR)
(72) Inventeur: Chaudiere, André, 30240 le Grau du Roi (FR)
(74) Mandataire: Rhein, Alain
(86) Numéro de dépôt international: PCT/FR2001/001360
(87) Numéro de publication internationale: WO 2001/085552

(56) Documents cités:
- EP-A- 0 108 537
- EP-A- 0 527 066
- FR-A- 1 436 430
- US-A- 3 497 127

## Description

La présente invention concerne un emballage à base rectangulaire, légèrement tronconique, sans couvercle, monolithique et gerbable.
Ce type d'emballage est surtout utilisé pour le conditionnement, le stockage en chambre "froide", le transport des fruits et légumes, et enfin leur présentation sur un étal.
Ce type d'emballage est traditionnellement fabriqué à partir de trois matériaux :
**BOIS** (déroulé, contreplaqué, fibre)
   AVANTAGES :
      - rigidité tenue au gerbage et pendant le transport, malgré l'humidité ambiante qu'il contribue à réguler
      - hygiénique puisqu'il n'est pas réutilisé
   INCONVENIENTS :
      - processus de fabrication laborieux donc prix de revient relativement élevé
      - stockage et transport à vide après mise en volume, onereux; implique le montage près des lieux d'utilisation
      - recyclage difficile (compactage et agrafes)
**CARTON** (ondulé ou compact)
   AVANTAGES :
      - processus de fabrication très performant des "flans" découpés
      - permet le stockage et le transport à plat des "flans" : économie de fret et de place
      - mise en volume sur les lieux d'utilisation par des machines relativement simples
      - permet de belles impressions (P.L.V.)
   INCONVENIENTS :
      - dégradation des caractéristiques mécaniques en ambiance humide : limite la hauteur du gerbage en frigo et pendant le transport des marchandises
      - tenue du collage aléatoire
**PLASTIQUE**
   AVANTAGES :
      - rigides et pliables : facilitent le transport et le stockage et le montage sans outillage particulier
      - leur prix de revient élevé implique la réutilisation de ces emballages plusieurs fois
   INCONVENIENTS :
      - logistique compliquée (consignation)
      - hygiène ou qualités phytosanitaires douteuses

On connaît d'après le document FR-A-1436430 un emballage selon le préambule de la revendication 1.

L'emballage, selon l'invention, permet d'allier les qualités de l'emballage en bois, par le choix du matériau, tout en utilisant un processus de fabrication qui permet un stockage et un transport à plat et la mise en volume sur le site d'utilisation, au fur et à mesure des besoins de la station de conditionnement, sans recourir a des matériels chers.

L'emballage est élaboré à partir d'un panneau bois : contreplaqué qualité emballage, ou fibre de bois ou particule, agglomérés, ou tout matériau rigide tel le carton compact.

Le panneau est découpé pour obtenir un flan dont la partie centrale est le rectangle base de l'emballage à obtenir; chacun des côtes de ce rectangle central est complété par des ) rectangles latéraux dont la largeur est égale à la hauteur de l'emballage souhaité et leur longueur est commune et egale respectivement à celle des côtes du rectangle central.

Deux des rectangles latéraux, situés en vis-à-vis, comporteront dans chaque angle périphérique une decoupe en torme de tenon, dont la partie située vers l'exteneur est sensiblement en queue d'aronde, la partie vers l'intérieur étant au contraire dégageante.

Les deux autres rectangles situés en vis-à-vis comportent des fenêtres, découpées de telle sorte que les tenons décrits plus haut viennent s'y loger et se verrouiller.

Un fraisage est pratique sur le périmètre du rectangle central par une fraise à section isocèle dont l'angle est égal ou légèrement supérieur à 90°; la profondeur du fraisage est legerement inférieure a l'épaisseur du panneau : la matière résiduelle fera office de charnière lorsqu'on repliera les quatre panneaux latéraux pour constituer les côtés de l'emballage.

Il sera pratiqué une découpe sur chaque extrémité de la charnière des panneaux comportant les "fenêtres", sur environ un dixième de leur longueur; cette découpe continuera sensiblement perpendiculairement à la charnière, dans le rectangle base, sur une longueur qui sera fonction de l'élasticité du matériau utilisé : ces deux dernières découpes permettent de "soulever" les panneaux comportant les "tenêtres" par rapport au rectangle de base.

Les deux plus courts rectangles latéraux pourront comporter sur leur côté périphérique une excroissance généralement rectangulaire en saillie d'une hauteur très légerement supérieure à l'épaisseur du panneau utilisé.
Ces excroissances viendront se loger dans deux "fenêtres" ménagées dans le rectangle base, assurant ainsi le calage latéral et bidirectionnel des emballages empilés l'un sur l'autre.

Les deux plus longs rectangles pourront être découpés comme il est d'usage traditionnel, pour ménager le passage de l'air et examiner le contenu après gerbage.

Pour mettre en volume l'emballage, il suffit de replier les deux panneaux latéraux comportant les tenons, d'un angle légèrement supérieur a 90°, puis de replier les deux panneaux comportant les "fenêtres" en plaçant les tenons et les fenêtres en vis-à-vis.
Ces ceux derniers panneaux. grâce aux découpes dans le fond décrites plus haut, peuvent jouer pour que les fenêtres viennent s'encliqueter dans la partie en queue d'aronde des tenons et ensuite se verrouiller définitivement grâce à la "mémoire" du matériau. Ce verrouillage sans jeu est définitif, sans apport de colle ou d'agrafes.

L'emballage ainsi obtenu s'inscrit parfaitement dans un parallélépipède rectangle dont la base va protéger les tenons pendant les manutentions; sa forme intérieure, légèrement tronconique, permet de deporter vers l'intérieur du rectangle-base les faces d'appui des côtes ce qui facilite le gerbage et sécurise totalement la transmission de la charge à la palettisation: le surplomb des fonds par rapport aux faces d'appui du col de l'emballage permet de saisir facilement un ou plusieurs emballages haut de pile, sans être obligé de créer des trous de poignée dans les côtes.
- Le panneau peut recevoir une feuille de papier ou "cartonnée", ou film, qui recouvre tout ou partie (dans ce dernier cas de préférence les zones de pliage) de la face externe de l'emballage. Cette feuille pourra être pré-imprimée pour caractériser le produit et en assurer la publicité.
   Cette feuille ou film renforcera notablement la tenue des angles pliés, et, le cas échéant. l'imperméabilité extérieure de l'emballage.
- Le panneau peut recevoir, dans les parties fraisées des lignes de pliage, une couche de colle qui s'auto-collera au moment de la mise en volume.
- La colle peut être déposée dans les parties fraisées juste avant la mise en volume : on pourra dans ce cas utiliser de la colle vinylique moins chere et moins sensible aux variations thermiques que les colles hot-melt.
Divers autres caractéristiques et avantages de l'invention ressortent d'ailleurs de la description détaillée qui suit. A titre d'illustration, des formes de réalisation de l'objet de l'invention et des modes d'exécution sont représentés, à titre d'exemples non limitatifs, sur les dessins annexés.
- la fig. 1 est le dessin d'un flan decoupe dans un panneau fibre de bois, sur lequel a été contrecollé au préalable, sur la face inférieure une feuille de papier pré-imprimé.
- la fig. 2 est une en perspective qui montre l'emballage partiellement mis en volume

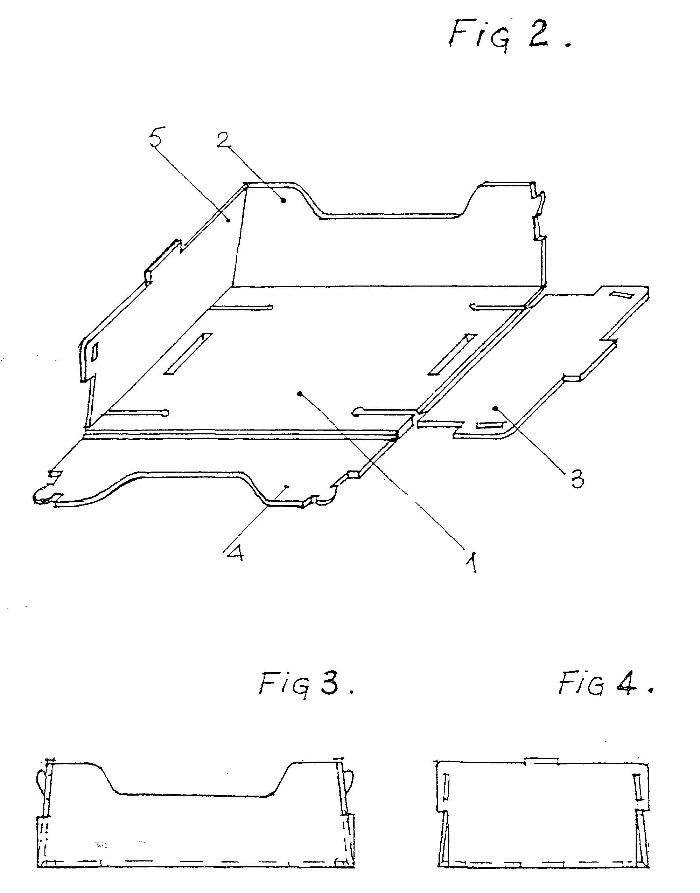

- la fig 3 est une vue en élévation de ce même emballage mis en volume
- la fig 4 est une vue de gauche de ce même emballage mis en volume
- la fig. 5 est une vue en élevation d une pile d'emballages gerbes les uns sur les autres
- la fig. 6 est une vue de gauche de cette même pile
- la fig. 7 coupe AA de fig. 1 montre le fraisage charnière entre fond et côté, pour pliage
- la fig. 8 coupe BB montre la coupe entre fond et côtés hors charnière
- la fig. 9 coupe CC montre la flexion partielle du fond pendant l'approche du verrouillage
- la fig. 10 coupe CC montre la jonction définitive
- la fig. 11 montre le détail du decoupage des ouvertures dans deux côtés opposés : (3) et (5)
- la fig. 12 montre le détail du decoupage des tenons dans les deux autres côtés : (2) et (4)

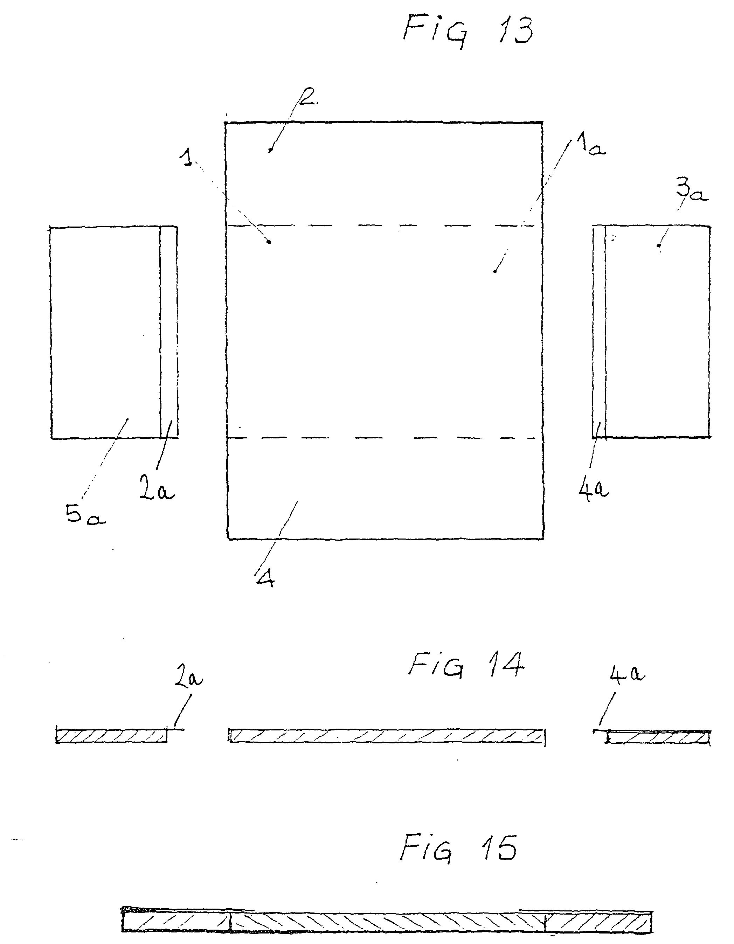

- la fig. 13 montre la preparation des trois panneaux avant constitution d'un flan unique - vue en plan.
   L'emballage correspondant est revendiqué dans la revendication 7
- la fig. 14 montre les mêmes panneaux vus de dessus, avant assemblage
- la fig. 15 montre les mêmes panneaux après assemblage

En référence à ces dessins, le flan découpé d'une seule pièce, dans un panneau de contreplaque ou fibre bois ou similaire, comporte une partie centrale. rectangulaire (1), base du futur emballage; chacun des côtés de ce rectangle central est complété par des rectangles latéraux (2-5) dont la largeur est égale à la hauteur de l'emballage souhaité, et la longueur est commune et égale respectivement à celle de chaque côté du rectangle central.

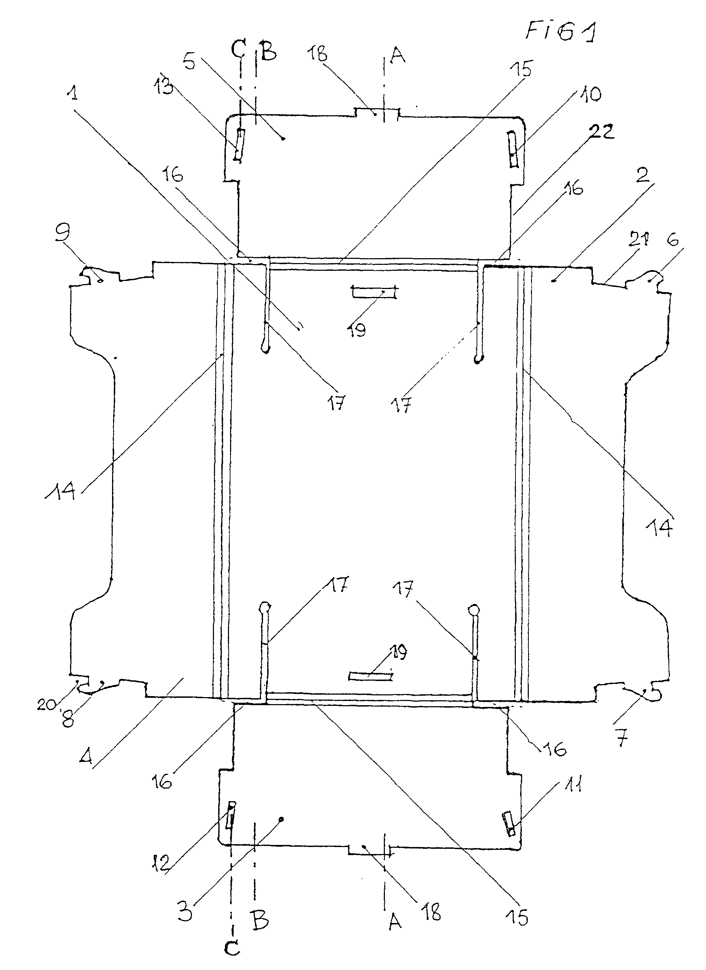

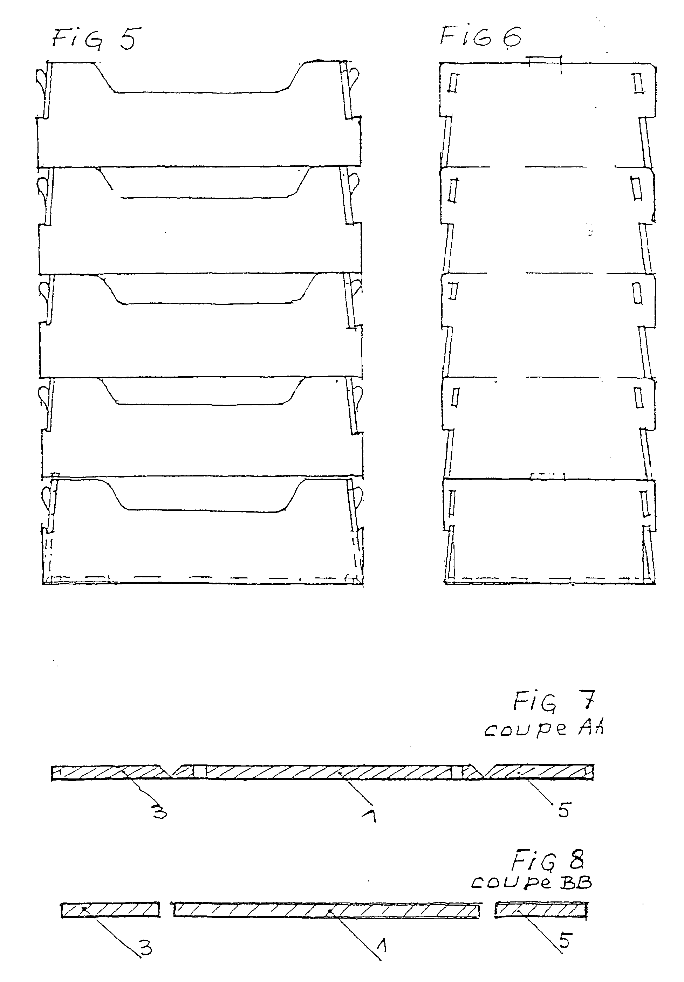

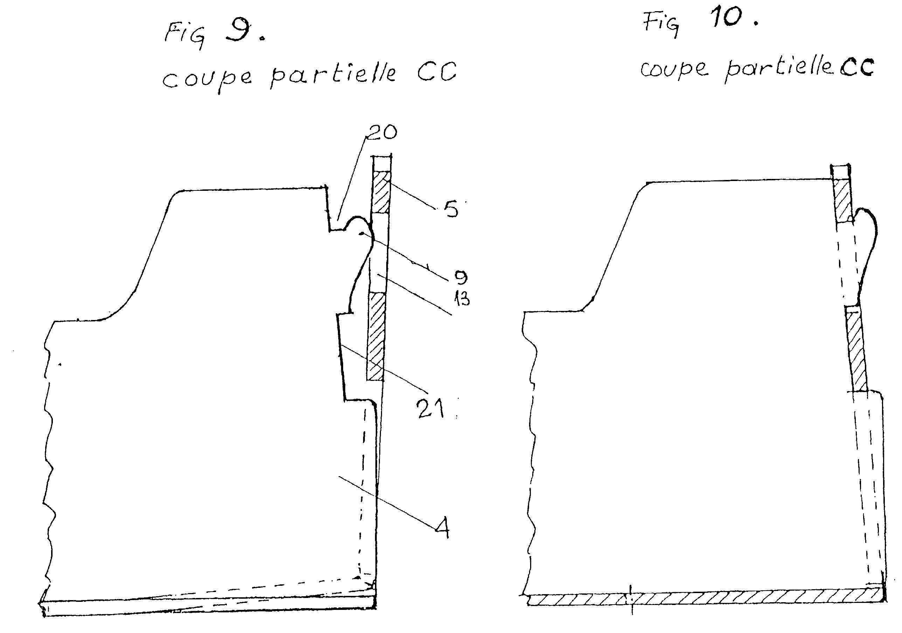

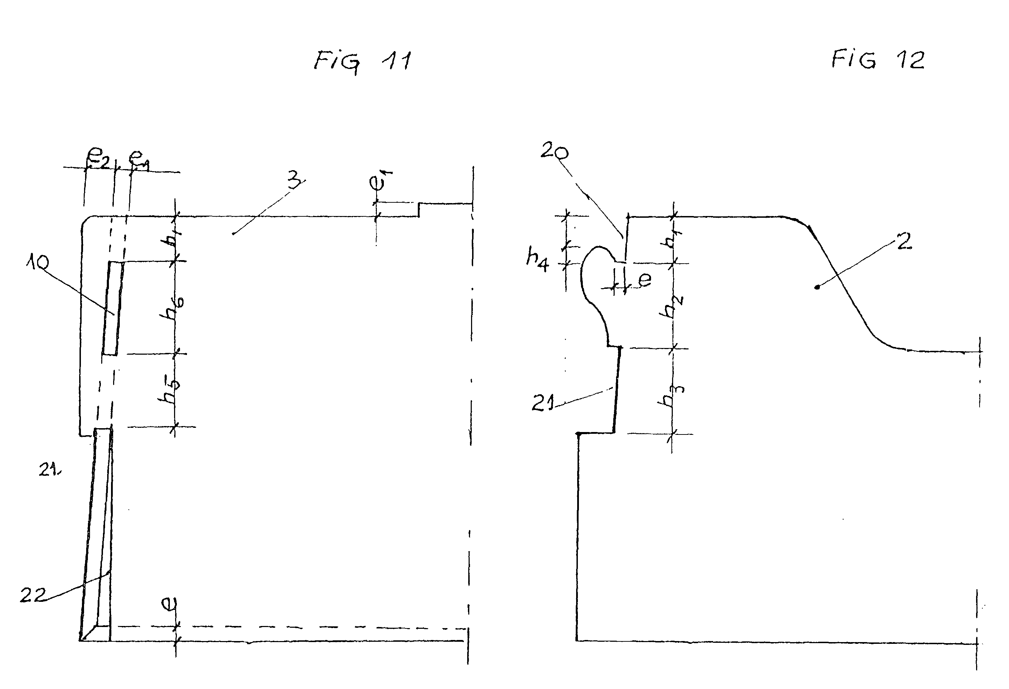

Deux des rectangles lateraux (2) et (4) comportent dans chaque angle périphérique une découpe en forme de tenon (6-9). Ces tenons, sorte d'oreilles, (fig. 12), comportent, vers l'extérieur du flan, une encoche (20), dont la profondeur (h₁) est sensiblement egale a quatre fois l'épaisseur (e) du panneau et la largeur au fond de l'encoche est égale à (e). La saillie verticale (h₄) du tenon, (fig. 12), est sensiblement egale a deux fois l'épaisseur (e). La partie attenante (h₂) du tenon est sensiblement égale à sept fois l'épaisseur (e) pour résister aux poussées internes. La forme du tenon est sensiblement celle d'une oreille dont le contour supérieur permet de ménager de la matière au-delà de l'encoche, afin de résister aux poussées internes; le contour intérieur est dégageant pour permettre d'approcher les côtés (3,5) (fig.9) lorsqu'on les soulève pour passer par-dessus la pointe supérieure des oreilles avant de les laisser tomber au fond de l'encoche où elles se verrouillent.
Sous l'oreille (fig. 12) se trouve un redent sensiblement horizontal dont la saillie est égale au moins a (e). Les encoches (20,21) - (fig. 12) ont une partie rectiligne, légèrement inclinée, pour permettre aux côtés (3,5) de venir trouver leur appui et définissent la conicité du tronc de cône interne a l'emballage.
Sur les côtés (3,5) - (fig. 1, fig. 11) sont découpées des fenêtres (10-13) dont la largeur interne (e₁) est égale à (e) + 0.2 millimètre et la longueur (h₆) égale a (h₂) + 1 millimètre. La partie supérieure des côtés (3,5) est rectangulaire et définit la géométrie parallélépipédique rectangle externe de l'emballage; la partie inférieure est degagée en dessous des fenêtres (10-13) à une distance (h₅) égale à (h₃) - 1 millimétre (fig.12). Ce dégagement facilite la mise volume et permet d'aerer le contenu.
La partie inférieure (fig. 11) comporte un crantage supplémentaire (21 ) qui parfait le verrouillage de l'assemblage. Les fenêtres ont une orientation inclinée pour donner a l'emballage la conicité des faces (2,4).
Un fraisage (14) pour les grands côtés et un fraisage (15) pour les petits côtés (3,5) est pratiqué sur le périmètre du rectangle central par une fraise à section isocèle dont l'angle est légèrement supérieur à 90°; la profondeur légèrement inférieure a l'épaisseur du flan permet de repher (à la manière des quatre charnières) les quatre côtés (2-5) attenants au rectangle central pour mettre en volume l'emballage, en lui donnant une forme intérieure légèrement tronconique.
Il a ete pratiqué une decoupe (16) a chaque extrémité des charnières, sur environ un dixième de la longueur du côté concerné; cette découpe continue (17) / (fig.1) dans le fond (1) sur une longueur égale environ a dix fois l'épaisseur (e); les découpes (17) permettent de soulever les côtés (3) et (5) lors de la mise en volume pour permettre l'encliquetage et maintenir le verrouillage (fig. 9 et fig. 10) en position stable. Les deux côtes courts (3,5) comportent un tenon (18) dont la hauteur est légèrement supérieure à l'épaisseur (e).
Le fond (1) comporte deux ouvertures (19) situees de telle sorte qu'en posant un deuxième emballage identique sur le premier, les tenons (18) viennent se loger avec un léger jeu latéral et longitudinal dans les ouvertures (19) et verrouillent ainsi les deux emballages entre eux, facilitant le gerbage à la verticale et solidarisant la pile (fig. 5 et fig. 6).

## Revendications

1. Emballage à base rectangulaire, sans couvercle, tel que plateau, barquette en bois contreplaqué, panneau fibre de bois ou particules, carton compact ou ondulé, matériaux composites, pour le conditionnement aéré de produits divers tels que fruits et légumes, confiseries, et comprenant, d'une part, un fond (1) et quatre côtés (2-5) faisant corps avec lé fond pour former un contenant, dont le volume intérieur est légèrement tronconique et le volume extérieur s'inscrit dans un parallélépipède rectangle, d'autre part des tenons mâles (6-9) découpés dans deux côtés en vis-à-vis (2,4) et des ouvertures (10-13) découpées dans les deux autres côtés en vis-à-vis (3,5) pour verrouiller les côtés entre eux par encliquetage irréversible des tenons dans les ouvertures;
le flan est découpé et préparé à plat et comporte des fraisages (14,15) sur tout le périmètre du rectangle central (1); ces fraisages à section triangulaire, dont l'angle au sommet est légèrement supérieur à 90° et la profondeur légèrement inférieure à l'épaisseur du flan, permet de replier, à la manière des quatre charnières, les quatre côtés (2-5) attenants au rectangle central pour mettre en volume l'emballage, en lui donnant une forme intérieure légèrement tronconique;
cette forme tronconique permet de réserver un triangle de matière dans les côtés (2,4) délimité entre le volume interne tronconique et le volume externe parallélépipédique; dans ce triangle ou pourra découper des tenons (6-9)
cette forme tronconique permet de réserver un triangle de matière dans les côtés (3,5) délimité entre le volume interne tronconique et le volume externe parallélépipédique; dans ce triangle ou pourra découper des fenêtres (10-13) dans lesquelles ou pourra glisser les tenons (6-9) pour verrouiller la mise en volume
**caractérisé en ce que** les charnières (15) comportent des découpes partielles (16) qui se prolongent par des découpes (17) dans le fond perpendiculaires aux premières; ces découpes dans le fond (1) permettent, par élasticité, de soulever les côtés (3,5) pour permettre aux tenons (6-9) de s'encliqueter dans les ouvertures (10-13) et de verrouiller l'assemblage, en position stable.

2. Emballage suivant la revendication 1 **caractérisé** :
• **en ce que** les côtés *(3,5) comportent chacun un tenon (18)* dont la hauteur est légèrement supérieure à l'épaisseur du flan
• **en ce que** le fond (1) comporte deux ouvertures (19) situees de telle sorte qu en posant un deuxième emballage identique sur le premier, les tenons (18) viennent se loger avec un léger jeu lateral et longitudinal dans les ouvertures (19) et verrouillent ainsi les deux emballages entre eux, facilitant le gerbage à la verticale et solidarisant toute la pile pendant le transport.

3. Emballage suivant les revendications 1 et 2 **caractérisé en ce que** le panneau dans lequel a été découpé le flan a reçu préalablement par contre-collage une feuille de papier ou cartonnette ou film plastique, pré-imprimé ou non, sur la face extérieure du futur emballage; cette feuille enjolivera l'emballage, définira les caracteristiques du produit transporté, mais surtout renforcera les charnières (14,15); la feuille contrecollée pourra se limiter à des rubans adhésifs, pré-imprimés ou non, déposes au droit des charnières (14,15).

4. Emballage suivant les revendications 1 et 2 ou 1 et 3 **caractérisé en ce que** les parties fraisées (14,15) ont reçu une application de colle alors que le flan découpé est encore à plat; la prise de colle se fera lorsque l'emballage sera mis en volume : les deux faces fraisées et préencollées viendront en contact.

5. Emballage suivant revendication 1 **caractérisé en ce que** la forme tronconique des emballages permet, lorsqu'ils sont superposés et gerbes en piles, de les saisir par les bords du fond qui sont en saillie par rapport au périmètre du col de l'emballage.

6. Emballage suivant revendications 1 à 4 **caractérisé** :
• **en ce que** le flan est constitué d 'une pièce unique
• **en ce qu**'il peut être transporté à plat depuis l'usine de découpe Jusqu'au lieu d'utilisation
• **en ce qu** 'il peut être mis en volume et verrouillé dans sa forme utile sans apport de colle ou d'agrafes
• **en ce que** cette mise en volume peut être faite manuellement ou avec des moyens très simples.

7. Emballage suivant revendications 1 à 6 **caractérisé** :
• **en ce que** le flan est reconstitué à partir de trois pièces séparées
• **en ce que** la première pièce (1a) comprend le fond (1) et les deux côtés (2,4)
• **en ce que** les deux autres côtés (3a,5a) sont préparés séparément en vue d'être fixés sur la première pièce (1a); pour cela on contrecolle sur la face inférieure des côtés (3a,5a) une feuille qui déborde (2a) (4a); ces parties débordantes sont ensuite encollées pour fixer bord à bord (1a) et (3a) et (5a).

## Patentansprüche

1. Verpackung mit rechteckiger Basis, ohne Deckel, wie Tablett, kleiner Nachen aus Sperrholz, Platte aus Holzfasern oder Partikeln, dichtem oder wellenförmigem Karton, Verbundwerkstoffen für die gelüftete Verpackung unterschiedlicher Produkte wie Obst und Gemüse, Süßwaren, und umfassend, einerseits, einen Boden (1) und vier Seiten (2-5), die mit dem Boden fest verbunden sind, um einen Behälter zu bilden, dessen innere Volumen geringfügig kegelstumpfartig ist und dessen Außenvolumen sich in einem Quader einschreiben läßt, andererseits, männliche Zünglein (6-9), die in zwei gegenüberliegenden Seiten (2, 4) ausgeschnitten sind, und Öffnungen (10-13), die in den zwei anderen gegenüberliegenden Seiten (3, 5) ausgeschnitten sind, um durch nicht umkehrbares Einrasten der Zünglein in den Öffnungen die Seiten untereinander zu verriegeln ;
die Flanke ist ausgeschnitten und flach vorgefertigt und umfaßt auf dem ganzen Umkreis des zentralen Rechteckes (1) Ausfräsungen (14, 15) ; diese Ausfräsungen (14, 15) mit dreieckigem Querschnitt, dessen Winkel am Scheitel geringfügig größer als 90° und dessen Tiefe geringfügig kleiner als die Dicke der Flanke ist, erlauben, die vier am zentralen Rechteck angrenzenden Seiten (2-5) ähnlich wie vier Scharniere umzubiegen, um der Verpackung Volumen zu verleihen, indem sie ihr eine geringfügig kegelstumpfartige innere Form geben ;
diese kegelstumpfartige Form erlaubt, ein Materialdreieck in den Seiten (2, 4) vorzubehalten, abgegrenzt zwischen dem kegelstumpfartigen inneren Volumen und dem quaderförmigen äußeren Volumen ; in diesem Dreieck kann man Zünglein (6-9) ausschneiden;
diese kegelstumpfartige Form erlaubt, ein Materialdreieck in den Seiten (3, 5) vorzubehalten, abgegrenzt zwischen dem kegelstumpfartigen inneren Volumen und dem quaderförmigen äußeren Volumen ; in diesem Dreieck kann man Fenster (10-13) ausschneiden, in denen man die Zünglein (6-9) gleiten lassen kann, um die Volumenverleihung zu verriegeln;
**dadurch gekennzeichnet, daß** die Scharniere (15) Teilausschnitte (16) umfassen, welche durch Ausschnitte (17) im Boden verlängert werden, die senkrecht zu den Ersten sind ; diese Ausschnitte im Boden (1) erlauben durch Elastizität, die Seiten (3, 5) aufzurichten, um den Zünglein (6-9) zu erlauben, in den Öffnungen (10-13) einzurasten und die Zusammenfügung in stabiler Position zu verriegeln.

2. Verpackung nach Anspruch 1, **dadurch gekennzeichnet,**
**daß** die Seiten (3, 5) jeweils einen Zünglein (18) umfassen, dessen Höhe geringfügig größer ist als die Dicke der Flanke ;
**daß** der Boden (1) zwei sich derart befindliche Öffnungen (19) umfaßt, daß, indem man auf die erste Verpackung eine identische zweite Verpackung hinstellt, die Zünglein (18) mit einem geringfügigen Seiten- und Längsspiel in den Öffnungen (19) beherbergt werden und sie so die beiden Verpackungen untereinander verriegeln, wodurch das Aufstapeln nach der Senkrechte vereinfacht und der ganze Stapel während des Transports zusammengehalten wird.

3. Verpackung nach Ansprüchen 1 und 2, **dadurch gekennzeichnet, daß** die Platte, in der die Flanke ausgeschnitten ist, vorangehend auf der Außenseite der künftigen Verpackung durch Laminierung ein Papier- oder Kartonblatt oder einen Kunststoffilm, im voraus bedruckt oder nicht, erhalten hat ; dieses Blatt wird die Verpackung verzieren, die Eigenschaften des transportierten Produkts definieren und insbesondere die Scharniere (14, 15) verstärken; das laminierte Blatt kann sich auf im voraus bedruckte oder nicht bedruckte Klebebänder beschränken, die gegenüber den Scharniere (14, 15) angebracht sind.

4. Verpackung nach Ansprüchen 1 und 2 oder 1 und 3, **dadurch gekennzeichnet, daß** auf die gefrästen Teile (14, 15) Klebstoff aufgetragen wird, während die ausgeschnittene Flanke noch flach ist ; das Härten des Klebstoffs wird erfolgen, wenn der Verpackung Volumen verleiht wird ; die beiden gefrästen und mit Klebstoff versehenen Seiten werden in Berührung kommen.

5. Verpackung nach Anspruch 1, **dadurch gekennzeichnet, daß** die kegelstumpfartige Form der Verpackungen es erlaubt, wenn diese übereinandergelegt und zu Garben gebunden werden, sie an den Rändern des Bodens, die hinsichtlich des Umkreises des Verpackungshalses vorspringen, zu fassen.

6. Verpackung nach Ansprüchen 1 bis 4, **dadurch gekennzeichnet,**
**daß** die Flanke aus einem einzigen Stück gebildet ist,
**daß** sie von der Ausschneidefabrik bis zum Benutzungsort flach transportiert werden kann,
**daß** ihr ein Volumen verleiht und sie in ihrer nützlichen Form ohne Zusatz von Klebstoff oder Haken verriegelt werden kann,
**daß** diese Volumenverleihung manuell oder mit sehr einfachen Mitteln erfolgen kann.

7. Verpackung nach Ansprüchen 1 bis 6, **dadurch gekennzeichnet,**
**daß** die Flanke ausgehend von drei getrennten Stücken wiederhergestellt wird,
**daß** das erste Stück (1a) den Boden (1) und die beiden Seiten (2, 4) umfaßt,
**daß** die beiden anderen Seiten (3a, 5a) getrennt vorbereitet werden, um auf dem ersten Stück (1a) befestigt zu werden; dazu wird auf der unteren Fläche der Seiten (3a, 5a) ein Blatt laminiert wird, das über (2a) (4a) hinausragt ; diese hinausragenden Teile werden danach mit Klebstoff versehen, um (1a) und (3a) und (5a) dicht nebeneinander zu befestigen.

## Claims

1. Packaging with a rectangular base, without lid, such as a tray, a sleeve pack made of plywood, wood fibreboard or particle board, compact or corrugated cardboard, composite materials, for aerated packaging of various products such as fruit and vegetables, confectionary, and including, on the one hand, a bottom (1) and four sides (2-5) being integral with the bottom to form a container the inner volume of which is slightly truncated and the outer volume of which is inscribed within a rectangular parallelepiped, on the other hand, male tongues (6-9) cut out in two opposite sides (2, 4) and openings (10-13) cut out in the other two opposite sides (3, 5), to lock the sides to each other by the tongues irreversibly snapping into the openings ;
the flank is cut out and prepared in a flat position and includes countersinkings (14, 15) on the full periphery of the central rectangle central (1) ; these countersinkings (14, 15) with a triangular cross-section, the angle at the apex of which is slightly larger than 90° and the depth of which is slightly smaller than the thickness of the flank, allow folding, like four hinges, the four sides (2-5) adjacent to the central rectangle, in order to shape the packaging into a volume by providing it with a slightly truncated inner shape ;
this truncated shape allows preserving a triangle of material in the sides (2, 4), delimited between the truncated inner volume and the parallelepipedal outer volume ; in this triangle can be cut out tongues (6-9) ;
this truncated shape allows preserving a triangle of material in the sides (3, 5), delimited between the truncated inner volume and the parallelepipedal outer volume ; in this triangle can be cut out windows (10-13) into which can be caused to slide the tongues (6-9) in order to lock the shaping into a volume ;
**characterised in that** the hinges (15) include partial cut-outs (16) that are extended by cut-outs (17) in the bottom, perpendicular to the first ones; these cut-outs in the bottom (1) allow, because of their elasticity, lifting the sides (3, 5) in order to allow the tongues (6-9) to snap into the openings (10-13) and to lock the assembly in a stable position.

2. Packaging according to claim 1, **characterised**
**in that** the sides (3, 5) each include a tongue (18) the height of which is slightly larger than the thickness of the flank ;
**in that** the bottom (1) includes two openings (19) located so that, when placing a second, identical packaging onto the first one, the tongues (18) accommodate themselves with a slight side and longitudinal backlash into the openings (19) and thereby lock both packagings to each other, thus facilitating vertical stacking and making the whole pile integral during transportation.

3. Packaging according to claims 1 and 2, **characterised in that** the board out of which the flank has been cut has previously received, by lamination, a sheet of paper or thin cardboard or plastic film, whether pre-printed or not, on the outer face of the future packaging ; this sheet will embellish the packaging, will define the characteristics of the transported product, but will especially reinforce the hinges (14, 15) ; the laminated sheet can be limited to adhesive ribbons, whether pre-printed or not, applied in front of the hinges (14, 15).

4. Packaging according to claims 1 and 2 or 1 and 3, **characterised in that** on the countersunk portions (14, 15) has been applied glue while the cut-out flank is still in a flat position ; the hardening of the glue will occur when the packaging will be shaped into a volume ; both countersunk and pre-sized faces will enter into contact with each other.

5. Packaging according to claim 1, **characterised in that** the truncated shape of the packagings allows, when these are superposed and stacked into piles, seizing them by the edges of the bottom, which are protruding with respect to the periphery of the neck of the packaging.

6. Packaging according to claims 1 to 4, **characterised**
**in that** the flank is formed of one single piece,
**in that** it can be transported in flat position from the factory where it is cut to the site where it is used,
**in that** it can be shaped into a volume and locked in its useful shape without addition of glue or staples,
**in that** its shaping into a volume can occur manually or with very simple means.

7. Packaging according to claims 1 to 6, **characterised**
**in that** the flank is reconstituted from three separate pieces,
**in that** the first piece (1a) comprises the bottom (1) and the two sides (2, 4),
**in that** the other two sides (3a, 5a) are prepared separately with a view to being fixed to the first piece (1a); to this end, on the lower face of the sides (3a, 5a) will be laminated a sheet that protrudes (2a) (4a) ; these protruding portions are then sized, in order to be fixed edge to edge (1a) and (3a) and (5a).
